# EUROPEAN PATENT SPECIFICATION

(11) **EP 0 700 803 B1**
(45) Date of publication and mention of the grant of the patent: **11.11.1998**
(21) Application number: 95850143.9
(22) Date of filing: 22.08.1995
(51) Int. Cl.: B60J 7/185, E05C 17/32

(54) **Device for locking the sun-roof of a coach or the like vehicle**
Vorrichtung zum Verriegeln des Sonnendaches eines Wagens oder ähnlichen Fahrzeugs
Dispositif pour le verrouillage de toit solaire de voiture ou de véhicule similaire

(30) Priority: 09.09.1994 FI 944147
(43) Date of publication of application: 13.03.1996
(73) Proprietor: Oy Parabus Ltd., 21200 Raisio (FI)
(72) Inventor: Mattila, Jari, FIN-20100 Turku (FI)
(74) Representative: Henningsson, Gunnar

(56) References cited:
- EP-A- 0 054 741
- DE-A- 3 206 690

## Description

The present invention relates to a device for locking a sun-roof or a roof hatch of a coach or the like vehicle. The device comprises a double-armed lever mechanism
- the end of the first lever arm of which is attached to the frame of the sun-roof or the like fixed part, and
- the end of the second lever arm of which is attached to the body of the locking mechanism for the sun-roof. The body of the locking mechanism is attached to the sun-roof in such a way that the second lever arm is, in the closed position of the sun-roof, substantially parallel with the first lever arm. When the sun-roof is open, the second lever arm forms an angle with the first lever arm.

Such devices are generally known.

Various lever mechanisms for locking the sun-roofs of coaches are known. On the one hand, the lever devices must be such that the sun-roof is easy to lock and unlock, but on the other hand, such that it would not be possible for unauthorized persons open the sun-roof from the outside. The lever mechanisms are therefore provided with various locking mechanisms by means of which opening of the sun-roof from the outside is prevented.

If the locking mechanisms are stiff, it is difficult to open them. To close a stiff locking mechanism by force too violently may damage the locking mechanism or, for instance, cause distortion of the lever arm mechanism. A damaged locking mechanism will not close properly any more.

When a coach travels under a bridge, a high negative pressure may be produced between the roof of the vehicle and the bridge, which tends to open the sun-roof by force. If the locking mechanism then yields, the sun-roof will leak.

It is an object of the present invention to provide a device for locking sun-roofs which is better than those known earlier.

The object of the invention is to provide a device in which a violent turning of the handle or an exterior force is less able to damage the locking and lever mechanisms than previously.

In order to achieve the above objects, the device for locking a sun-roof according to the invention is characterized by the features set forth in the appended claims.

The device according to the invention comprises, in addition to the double-armed lever, a locking mechanism the body of which is connected to a slide moving substantially in the direction of the sun-roof, the one end of which slide, i.e. the so called locking end, in the rest position of the slide and in the closed position of the sun-roof, protrudes from the locking mechanism towards a stationary stopping piece, whereby the slide locks the lever arms and the sun-roof in the closed position.

The slide is preferably disposed in the device between the main part of the body of the locking mechanism and the sun-roof. The locking end of the slide protrudes from the locking mechanism into a gap between the lever arm attached to it and the sun-roof.

According to an advantageous embodiment of the invention, disposed in the locking mechanism is a spring which pushes the locking end of the slide out from the locking mechanism when the slide is in its rest position. Instead of a separate spring, a slide in which a spring is built in or formed, i.e. a so called spring slide, can of course be used.

The stopping piece for the slide, a projecting part, is preferably formed in that end of the lever arm which is attached to the frame of the sun-roof. The point of support of the locking of the sun-roof will then be located near that part of the device which is firmly fastened to the frame and the roof. In this way detrimental torques acting on the joint of the lever mechanism when the sun-roof is being opened or closed or the negative pressures or other forces acting on the sun-roof when it is closed, will be minimized.

The device according to the invention is further provided with a handle mechanism by means of which the slide can be moved away from the stopping piece so as to release the lever mechanism.

According to an advantageous embodiment, wedgelike wings protruding from the slide towards the handle mechanism are formed in the slide, by means of which the handle moves the slide. In the handle mechanism, which is pivotably connected to the body of the locking mechanism, there are formed thrust members which are in contact with the wedgelike wings, which thrust members can by means of the handle be pressed upwards towards the wedgelike wings so as to push the slide from the rest position to the opened position against the push force of the spring.

A lug or the like, which indicates that sun-roof is open, can further preferably be connected to the slide. The lug is preferably formed on an inner slide parallel with the slide, which inner slide is disposed slidably in a groove formed in the principal slide. The inner slide is disposed in the slide in such a way that the stop for the slide, in the locked position of the locking mechanism, pushes the inner slide at one end of it in such a way that its other end, i.e. the indicating end, protrudes from the body of the locking mechanism. Between the slide and the inner slide, a spring mechanism is disposed, which in the unlocked position of the locking mechanism pushes the inner slide back into the body of the locking mechanism in such a way that the indicating end can not be seen.

The invention provides a locking device for a sun-roof, in which the detrimental torques which act on the lever mechanism have been minimized by positioning the slide, the locking end and the stop of the locking mechanism in an advantageous manner. In this way the distortion of the lever mechanism and other damage to the locking devices which occur in the earlier known devices can be avoided and the function of the locking device is ensured.

The invention will now be described more in detail with reference to the accompanying drawing, on which
- FIG. 1: is a schematic top view of a device according to the invention, seen obliquely from above;
- FIG. 2: is a schematic cross-sectional view of the body and the handle mechanism of the locking mechanism of the device of FIG 1;
- FIG. 3: is a schematic top view of the opened body and the lever mechanism of the locking mechanism of the device of FIG 1;
- FIG. 4: is a side view of one of the lever arms of FIG. 3 seen in the direction of arrows AA;
- FIG. 5: is a sectional view taken along line BB of FIG. 4;
- FIG. 6: is a view of the opened body of the locking device of FIG. 3, in which a slide according to the invention is disposed;
- FIG. 7: is a schematical side view of an inner slide according the invention;
- FIG. 8: is a schematical side view of a slide according to the invention;
- FIG. 9: is a top view of the inner slide;
- FIG. 10: is a schematical cross-sectional view of the locking device according to the invention, attached to the sun-roof and the frame when sun-roof is closed; and
- FIG. 11: is a view of the locking device of FIG 10 when the sun-roof is opened.

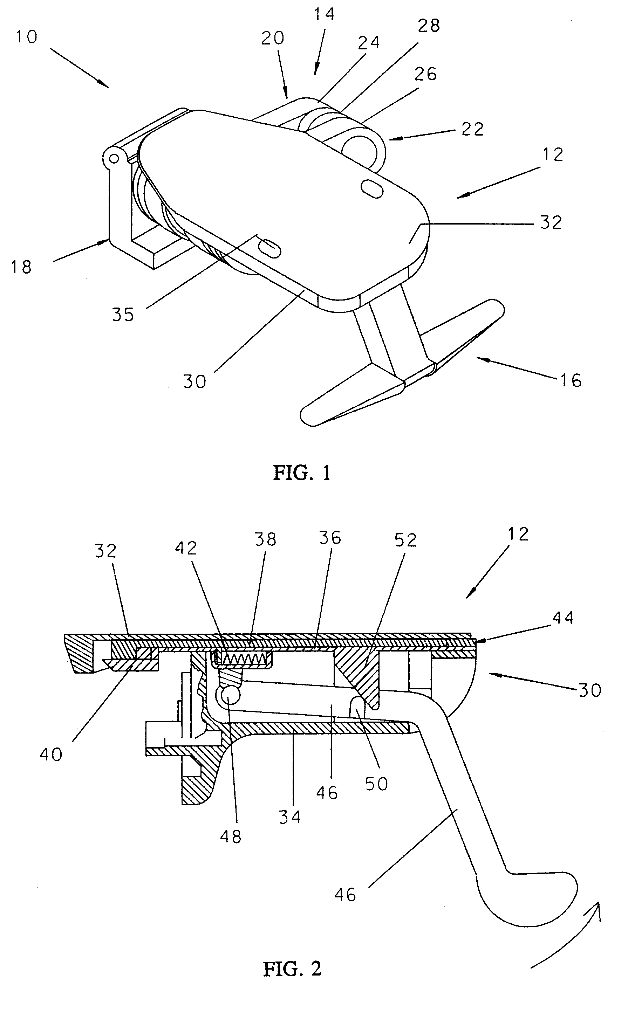

FIG. 1 shows a locking device 10 for a sun-roof, in which there are a locking mechanism 12, a lever mechanism 14, a handle mechanism 16 and an attachment member 18. The lever mechanism 14 comprises first and second lever arms 20 and 22 only partially shown in the figure. The lever arms are connected to each other at one of their ends 24 and 26 by a joint 28, The first lever arm 20 is connected to the attachment member 18, which is attached to the frame of the sun-roof. The second lever arm 22 is connected to the body 30 of the locking mechanism. In the top plate 32 of the body 30 of the locking mechanism there are openings 35 for fastening the body by screws, for instance, to the cover plate of the sun-roof.

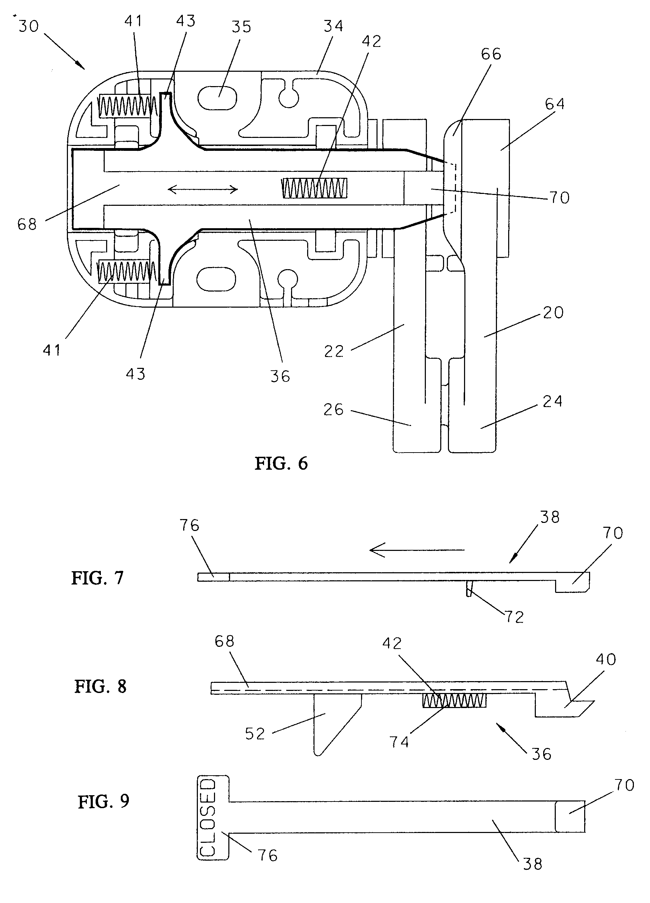

FIG. 2 shows a cross section of the locking mechanism 12 and the handle mechanism 16 shown in FIG. 1. The top plate 32 and a casing 34 form the body 30 of the locking mechanism 12. A slide 36 sliding substantially in the direction of the surface of the cover plate of the sun-roof and an inner slide 38, which are also shown as a mirror image in FIG. 8, are disposed in the upper part of the body.

In the end of the slide 36 facing the lever mechanism there is formed a locking end 40 which when engaging a stop formed in the second lever arm, for instance, locks the arms 20 and 22 of the lever mechanism immovably to each other. Springs 41, which are shown in FIG.6, press the slide towards the lever mechanism in both in the opened and closed position of the sun-roof.

A groove is formed in the slide 36, in which groove an inner slide 38 having substantially the same length and the same direction as the slide is disposed and which, by means of a spring 42, is held inside the body, but which when the sun-roof is closed will, due to the stop, be pushed out a small distance from the body against the force of the spring 42 through a slot 44 formed in the body.

The handle mechanism 16 comprises the handle 46 and its extension part 46, which is pivotably connected to the body by means of a joint 48. Pins 50 or the like, which are in contact with wedgelike portions 52 formed in the lower part of the slide, are formed on the extension part of the handle. When the handle 46 is lifted in the direction of the arrow, the pins 50 will press the wedgelike portions 52 of the slide, thereby pushing the slide away from the lever mechanism end and a small distance out from the body through the slot 44 formed there. In this way, by turning or pressing the handle in the direction of the arrow, the locking end 40 can be moved away from the position where it is locking the lever arms to each other.

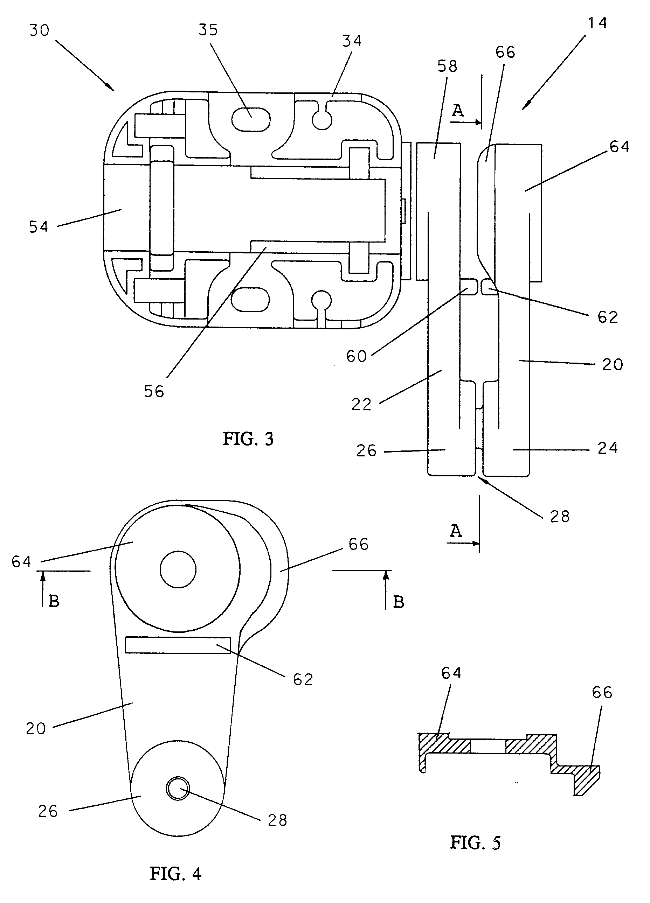

FIG. 3 shows the lever mechanism 14 and the opened body 30 of the locking mechanism seen from above. The body comprises sliding surfaces 54, 56 by means of which the slide 36 is supported in the body. One end 58 of the second lever 22 of the lever mechanism is attached to one end of the body. The other end 26 of the lever 22 is connected by means of a joint 28 to one end 24 of the first lever 20. At the other end 64 of the lever 20 there is formed a stop or retainer 66 for the slide 36. The design of the stop 66 can be seen in FIG. 4, which shows the lever arm 20 seen from the side, and in FIG. 5, which shows one end 64 of the lever arm and the stop 66. The stop 66 forms in the end 64 of the lever arm 20 an upwardly directed cut, which the locking end 40 of the slide in its utmost position engages.

FIG. 6 shows the body 30 of the locking mechanism according to FIG. 3, in which the slide 36 is disposed. The locking mechanism is in its rest position with the sun-roof closed. The springs 41 press the projecting portions 43 of the slide, thereby pushing the locking end 40 of the slide towards the lever mechanism. The locking end of the slide is pushed under the stop 66 formed at the end of the lever arm 20, thus locking the locking mechanism. The stop 66 prevents the slide and thus the whole body of the locking mechanism and the lever arm 22 from rising upwards, i.e. the slide locks the locking mechanism and the lever arms to their places.

An inner slide 38, shown in fIG. 7, can be disposed on the slide in a groove 68 formed therein. The inner slide 38 is held in its place in the groove by the top plate of the body. The free movement of the inner slide in the groove in the direction of the arrow is prevented by a spring 42 disposed in the slide 36. The end 70 of the inner slide facing the lever mechanism is, however, shaped so that the stop 66 formed in the first lever arm 20, in the closed position of the sun-roof, pushes the end 70 of the inner slide against the push force of the spring 42.

The design and function of the slide 36 and the inner slide 38 can be seen in FIGS. 7, 8 and 9, in which FIG. 7 shows the inner slide 38, FIG. 8 the slide 36 seen from the side, and FIG. 9 the inner slide seen from below. The inner slide is disposed in the groove 68 of the slide, whereby the projecting part 72 extending downwardly therefrom penetrates into a cavity 74 formed in the slide, in which the spring 42 is disposed. The spring presses the inner slide towards the lever mechanism. In the locked position of the sun-roof, however, the stopping piece 66 pushes the inner slide backwards from its end 70 against the push force of the spring, in the direction of the arrow of FIG. 7, whereby the indicating end 76 of the inner slide protrudes from the body of the locking mechanism indicating that the sun-roof is properly locked.

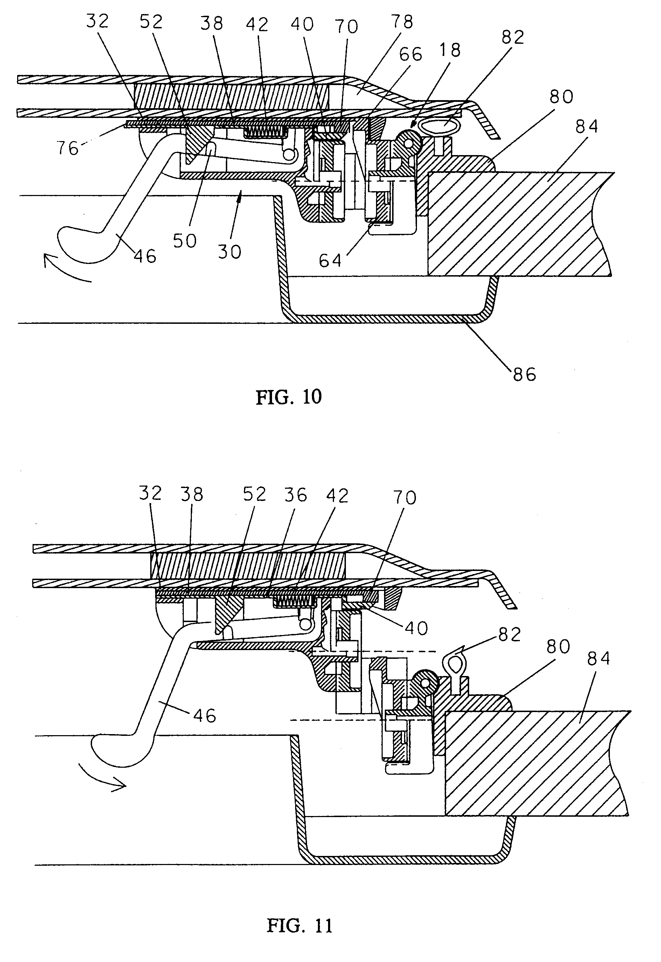

FIG. 10 shows the locking device according to the invention attached to the sun-roof 78 and the frame 80 of the sun-roof. In FIG. 10, the same reference numbers have, when applicable, been used as in the earlier figures. The body 30 of the locking mechanism is fastened by screws to the sun-roof 78, which is made of two-layer glass or plastics. The attachment member attached to the end 64 of the first lever arm 20 of the lever mechanism is attached to the frame 80 of the sun-roof by means of a hinge. A sealing 82 is disposed between the sun-roof 78 and its frame 80. The frame 80 of the sun-roof is attached to the roof 84 of the vehicle or the like. A protecting plate 86 which is attached to the roof, covers the lever mechanism 12. The body 30 of the locking mechanism, the handle 46 and the indicating end 76 of the inner slide can be seen from the interior of the vehicle. As can be seen in the figure, the locking end 40 of the slide can be pushed under the stop 66, but the stop has prevented the inner slide 38 from moving the same distance in the direction of the lever mechanism.

FIG. 10 shows the locking mechanism when it is being unlocked, whereby the handle 46 is pressed obliquely upwards in the direction of the arrow the pins 50 of the handle pressing the wedgelike portions 52 of the slide 36, thereby moving the slide and the locking end 40 away from the stopping piece 66 of the lever mechanism. In this position, the lever arms 20 and 22 (shown in FIG. 6) can be turned in relation to each other and the sun-roof can be opened.

FIG. 11 shows the locking device of FIG. 10 when the sun-roof is open. The handle 46 has returned downwards to its original position and the pins 50 of the handle mechanism do not any more press the wedgelike portions 52. The springs 41 of the slide 36 have pushed the slide back against the lever mechanism, i.e. against the lever arm 22. The indicating end 76 of the inner slide has been withdrawn into the body of the locking mechanism and can not be seen.

The invention is not limited to the embodiment described and illustrated above, but can be varied in many ways within the scope of the invention, which is defined in the appended claims. It is understood that the invention can be used in a number of different applications, in which there are roof hatches similar to the sun-roof of a coach, which have to be possible to lock.

## Claims

1. A device for locking a sun-roof or a roof hatch for a coach or the like vehicle, which device comprises a double-armed lever mechanism (14),
- the end (64) of the first lever arm (20) of which is attached to the frame (80) of the sun-roof or the like fixed part, and
- the end (58) of the second lever arm (22) of which is attached to the body (30) of the locking mechanism for the sun-roof, which locking mechanism is attached to the sun-roof (78) in such a way that the second lever arm (22), in the closed position of the sun-roof, is substantially parallel with the first lever arm (20) and when the sun-roof is open, forms an angle with the first lever arm, **characterized** in that connected to the body (30) of the locking mechanism for the sun-roof there are
- a slide (36) moving substantially in the direction of the sun-roof or in the plane of it, one end (40) of which slide, i.e. the so called locking end, in the rest position of the slide and in the closed position of the sun-roof protrudes from the locking mechanism towards a stopping piece disposed firmly on the frame of the sun-roof or on the first lever arm (20), thereby locking the second lever arm (22) beside the first lever arm (20), and
- a handle mechanism (14, 46, 50), by means of which the slide can be moved away from the stopping piece so as to release the second lever arm.

2. The device according to claim 1, **characterized** in that a spring (41) which pushes the locking end (40) of the slide out from the locking mechanism when the slide (36) is in its rest position is disposed in the locking mechanism.

3. The device according to claim 1, **characterized** in that at the end (64) of the first lever arm (20) there is formed a projecting part which forms the stopping piece (66) for the locking end of the slide.

4. The device according to claim 1, **characterized** in that the slide (36) is disposed in the locking mechanism so that its locking end (40) protrudes therefrom into a gap formed between the end (58) of the second lever arm (22) and the sun-roof (78).

5. The device according to claim 2, **characterized** in that
- wedgelike wings (52) protruding from the slide (36) towards the handle mechanism are formed in the slide, which is disposed in the locking mechanism, and that
- pins (50) or the like thrust members, which are in contact with the wedgelike wings and by means of the handle (46) can be pressed against the wedgelike wings so as to push the slide from the rest position to the unlocked position against the push force of the spring (41), are formed in the handle mechanism (16).

6. The device according to claim 5, **characterized** in that
- the handle mechanism (16) is pivotably connected by means of a joint (48) to the body (30) of the locking mechanism so that the thrust members (50) move towards the sun-roof (78) when the handle (46) is being pushed,
- the slide (36) is disposed between the handle mechanism (16) of the locking mechanism and the sun-roof (78), and
- the wedgelike wings (52) are disposed in the slide so that they protrude away from the sun-roof towards the handle mechanism (16).

7. The device according to claim 1, **characterized** in that a separate inner slide (38) is connected to the slide (36) parallel with the same, the first end of which inner slide, when in the rest position, is arranged to protrude from the locking mechanism in the direction of the locking end (40) of the slide, and the second end (76) of which inner slide is arranged to protrude from the locking mechanism in the other direction, pressed by the stop (66) for the slide, when the sun-roof is in the closed position, thereby indicating that the sun-roof is closed.

8. The device according to claim 7, **characterized** in that in the slide (36) there is disposed a spring (42), which presses the inner slide (38) connected to the slide so that its first end, in the rest position, protrudes from the locking mechanism.

9. The device according to claim 1, **characterized** in that in the end (64) of the first lever arm (20), preferably on its upper part, there is formed
- an attachment part (18), by means of which the lever arm is attached to the frame (80) of the sun-roof, and
- the stopping piece (66) for the slide of the locking mechanism, by means of which the second lever arm (22) is locked beside the first lever arm (20)

## Patentansprüche

1. Vorrichtung zur Verriegelung eines Sonnendachs oder einer Dachluke eines Omnibusses oder ähnlichen Fahrzeugs, welche Vorrichtung einen zweiarmigen Hebelmechanismus umfaßt, (14),
- wobei das Ende (64) des ersten Hebelarms (20) am Rahmen (80) des Sonnendachs oder einem ähnlichen feststehenden Teil befestigt ist, und
- das Ende (58) des zweiten Hebelarms (22) am Körper (30) des Riegelmechanismus fürs Sonnendach befestigt ist, welcher Riegelmechanismus am Sonnendach (78) auf solche Weise befestigt ist, daß der zweite Hebelarm (22), in der Geschlossen-Stellung des Sonnendachs im wesentlichen parallel zum ersten Hebelarm (20) ist und bei geöffnetem Sonnendach einen Winkel mit dem ersten Hebelarm bildet, dadurch **gekennzeichnet**, daß mit dem Körper (30) des Riegelmechanismus verbunden sind
- ein Schieber (36), der sich im wesentlichen parallel zum Sonnendach oder in seiner Ebene bewegt, wobei das eine Ende (40) des Schiebers, d.h. das sog. Riegelende, in der Ruhestellung des Schiebers und in der Geschlossen-Stellung des Sonnendachs vom Riegelmechanismus zu einem Anschlag hin herausragt, der fest am Rahmen des Sonnendachs oder am ersten Hebelarm (20) angeordnet ist, wobei es den zweiten Hebelarm (22) neben dem ersten Hebelarm (20) verriegelt, und
- ein Griffmechanismus (14, 46, 50), womit der Schieber weg vom Anschlag bewegt werden kann, um den zweiten Hebelarm zu entriegeln.

2. Vorrichtung nach Anspruch 1, dadurch **gekennzeichnet**, daß eine Feder (41), die das Riegelende (40) des Schiebers aus dem Riegelmechanismus herausschiebt, wenn der Schieber (36) in seiner Ruhestellung ist, im Riegelmechanismus angeordnet ist.

3. Vorrichtung nach Anspruch 1, dadurch **gekennzeichnet**, daß am Ende (64) des ersten Hebelarms (20) ein vorspringender Teil ausgebildet ist, der den Anschlag (66) für das Riegelende des Schiebers bildet.

4. Vorrichtung nach Anspruch 1, dadurch **gekennzeichnet**, daß der Schieber (36) im Riegelmechanismus derart angeordnet ist, daß sein Riegelende (40) von dort in eine Lücke hervorspringt, die zwischen dem Ende (58) des zweiten Hebelarms (22) und dem Sonnendach (78) ausgebildet ist.

5. Vorrichtung nach Anspruch 2, dadurch **gekennzeichnet**, daß
- keilförmige vom Schieber (36) zum Griffmechanismus hin hervorspringende Flügel (52) im Schieber ausgebildet sind, der im Riegelmechanismus angeordnet ist, und daß
- Zapfen (50) oder ähnliche Druckorgane, die mit den keilförmigen Flügeln in Kontakt stehen und mittels des Griffs (46) gegen die keilförmigen Flügel gedrückt werden können, um den Schieber von der Ruhestellung zur entriegelten Stellung gegen die Schubkraft der Feder zu schieben (41), im Griffmechanismus (16) ausgebildet sind.

6. Vorrichtung nach Anspruch 5, dadurch **gekennzeichnet**, daß der Griffmechanismus (16) über ein Gelenk (48) mit dem Körper (30) des Riegelmechanismus drehbar verbunden ist, so daß sich die Druckorgane (50) auf das Sonnendach (78) zubewegen, wenn am Griff (46) gedruckt wird,
- der Schieber (36) zwischen dem Griffmechanismus (16) des Riegelmechanismus und dem Sonnendach (78) angeordnet ist, und
- die keilförmigen Flügel (52) im Schieber derart angeordnet sind, daß sie vom Sonnendach zum Griffmechanismus hin hervorspringen (16).

7. Vorrichtung nach Anspruch 1, dadurch **gekennzeichnet**, daß ein getrennter innerer Schieber (38) mit dem Schieber (36) parallel zu ihm verbunden ist, wobei das erste Ende des inneren Schiebers in der Ruhestellung derart angeordnet ist, daß es aus dem Riegelmechanismus in Richtung des Riegelendes (40) des Schiebers herausragt, und das zweite Ende (76) des inneren Schiebers so angeordnet ist, daß es aus dem Riegelmechanismus, durch den Anschlag (66) des Schiebers gedrückt, in der anderen Richtung herausragt, wenn das Sonnendach in der Geschlossen-Stellung ist, und damit anzeigt, daß das Sonnendach geschlossen ist.

8. Vorrichtung nach Anspruch 7, dadurch **gekennzeichnet**, daß im Schieber (36) eine Feder (42) angeordnet ist, die den inneren mit dem Schieber verbundenen Schieber (38) derart drückt, daß sein erstes Ende in der Ruhestellung aus dem Riegelmechanismus herausragt.

9. Vorrichtung nach Anspruch 1, dadurch **gekennzeichnet**, daß am Ende (64) des ersten Hebelarms (20), vorzugsweise an seinem oberen Teil, ausgebildet sind
- ein Befestigungsteil (18), mit dem der Hebelarm am Rahmen (80) des Sonnendachs befestigt wird, und
- der Anschlag (66) für den Schieber des Riegelmechanismus, mit dem der zweite Hebelarm (22) neben dem ersten Hebelarm (20) verriegelt wird.

## Revendications

1. Dispositif de verrouillage d'un toit ouvrant ou d'une trappe d'accès de toiture destiné à une voiture ou à un véhicule semblable, lequel dispositif comprend un mécanisme de levier à double bras (14),
- dont l'extrémité (64) du premier bras de levier (20) est fixée au châssis (80) du toit ouvrant ou de la partie fixe analogue, et
- dont l'extrémité (58) du second bras de levier (22) est fixée au corps (30) du mécanisme de verrouillage destiné au toit ouvrant , mécanisme de verrouillage qui est fixé au toit ouvrant (78) de telle façon que le second bras de levier (22), dans la position fermée du toit ouvrant, est essentiellement parallèle au premier bras de levier (20) et qui, lorsque le toit ouvrant est ouvert, forme un angle avec le premier bras de levier, caractérisé en ce que liés au corps (30) du mécanisme de verrouillage destiné au toit ouvrant, se trouvent :
- une glissière (36) se déplaçant essentiellement dans la direction du toit ouvrant ou dans son plan, dont une extrémité (40) , c'est à dire l'extrémité dite de verrouillage, dans la position de repos de la glissière et dans la position fermée du toit ouvrant, fait saillie à partir du mécanisme de verrouillage vers une pièce d'arrêt disposée solidement sur le châssis du toit ouvrant ou sur le premier bras de levier (20), de façon à verrouiller le second bras de levier (22) à côté du premier bras de levier (20), et
- un mécanisme de poignée (14, 46, 50) au moyen duquel la glissière peut être éloignée de la pièce d'arrêt, de façon à libérer le second bras de levier.

2. Dispositif selon la revendication 1, caractérisé en ce qu'un ressort (41) qui pousse l'extrémité de verrouillage (40) de la glissière hors du mécanisme de verrouillage lorsque la glissière (36) se trouve à sa position de repos , est disposé dans le mécanisme de verrouillage.

3. Dispositif selon la revendication 1, caractérisé en ce que, à l'extrémité (64) du premier bras de levier (20), est formé une pièce en saillie qui constitue la pièce d'arrêt (66) pour l'extrémité de verrouillage de la glissière.

4. Dispositif selon la revendication 1, caractérisé en ce que la glissière (36) est disposée dans le mécanisme de verrouillage, de façon que son extrémité de verrouillage (40) s'avance à partir d 'elle dans un espace formé entre l'extrémité (58) du second bras de levier (22) et le toit ouvrant (78).

5. Dispositif selon la revendication 2, caractérisé en ce que
- des surfaces d'appui en forme de coin (52), faisant saillie à partir de la glissière (36) vers le mécanisme de poignée, sont formées dans la glissière, laquelle est disposée dans le mécanisme de verrouillage, et en ce que
- des broches (50), ou des éléments de poussée analogues, qui sont en contact avec les surfaces d'appui en forme de coin et au moyen de la poignée (46) peuvent être pressées contre les surfaces d'appui en forme de coin, de façon à pousser la glissière de la position de repos vers la position déverrouillée contre la force de rappel du ressort (41), sont formées dans le mécanisme de poignée (16).

6. Dispositif selon la revendication 5, caractérisé en ce que
- le mécanisme de poignée (16) est raccordé à pivotement au moyen d'une articulation (48) au corps (30) du mécanisme de verrouillage, de façon que les éléments de poussée (50) se déplacent vers le toit ouvrant (78) lorsque la poignée (46) est poussée,
- la glissière (36) est disposée entre le mécanisme de poignée (16) du mécanisme de verrouillage et le toit ouvrant (78), et
- les surfaces d'appui en forme de coin (52) sont disposées dans la glissière de façon qu'elles s'avancent à l'écart du toit ouvrant vers le mécanisme de poignée (16).

7. Dispositif selon la revendication 1, caractérisé en ce qu'une glissière intérieure séparée (38) est liée à la glissière (36) parallèlement à elle, dont la première extrémité , lorsqu'elle est en position de repos, est agencée pour faire saillie hors du mécanisme de verrouillage dans la direction de l'extrémité de verrouillage (40) de la glissière, et dont la seconde extrémité (76) est agencée pour faire saillie à partir du mécanisme de verrouillage dans l'autre direction, pressée par la pièce d'arrêt (66) pour la glissière, lorsque le toit ouvrant se trouve en position fermée, de façon à indiquer que le toit ouvrant est fermé.

8. Dispositif selon la revendication 7, caractérisé en ce que dans la glissière (36) est disposé un ressort (42) qui comprime la glissière intérieure (38) liée à la glissière, de façon que sa première extrémité dans la position de repos, fasse saille à partir du mécanisme de verrouillage.

9. Dispositif selon la revendication 1, caractérisé en ce que dans l'extrémité (64) du premier bras de levier (20), de préférence sur sa partie supérieure, sont formées :
- une pièce de fixation (18), au moyen de laquelle le bras de levier est fixé au chassis (80) du toit ouvrant, et
- la pièce d'arrêt (66) destinée à la glissière du mécanisme de verrouillage , au moyen de laquelle le second bras de levier (22) est verrouillé à côté du premier bras de levier (20).
